# EUROPÄISCHE PATENTANMELDUNG

(11) **EP 2 228 665 A1**
(43) Veröffentlichungstag der Anmeldung: **15.09.2010**
(21) Anmeldenummer: 10002341.5
(22) Anmeldetag: 08.03.2010
(51) Int. Cl.: G01S 3/784, G01S 3/789, G01S 5/16

(54) **Vorrichtung zur Positionsbestimmung eines Flurförderzeugs**

(30) Priorität: 13.03.2009 DE 102009013671
(71) Anmelder: Jungheinrich Aktiengesellschaft, 22047 Hamburg (DE)
(72) Erfinder: Mänken, Frank, 24558 Henstedt-Ulzburg (DE); Schulz, Eckhard, 24558 Henstedt-Ulzburg (DE); Von Werder, Martin, 22949 Ammersbek (DE)
(74) Vertreter: Schildberg, Peter

(57) **Zusammenfassung**

Vorrichtung zur Positionsbestimmung eines Flurförderzeugs innerhalb eines räumlichen Gebiets, in dem mehrere Lichtquellen an vordefinierten Standorten positioniert sind und ohne Interaktion mit dem Flurförderzeug eine die Lichtquelle eindeutig kennzeichnende Strahlung aussenden, wobei das Flurförderzeug eine Empfangseinheit für die Strahlung der Lichtquellen aufweist, die dazu ausgebildet ist, um aus der empfangenen Strahlung die Lichtquelle zu identifizieren und einen Winkel der Lichtquelle gegenüber einer fahrzeugfesten Achse zu ermitteln, und das Flurförderzeug ferner eine Auswerteeinheit aufweist, die dazu ausgebildet ist, um aus mindestens drei identifizierten Lichtquellen und deren Winkeln die Position des Flurförderzeugs zu bestimmen.

## Beschreibung

Die vorliegende Erfindung betrifft eine Vorrichtung zur Positionsbestimmung eines Flurförderzeugs innerhalb eines räumlichen Gebiets.

Zur Positionsbestimmung von Flurförderzeugen in einer räumlichen Umgebung sind verschiedene Systeme bekannt. Ein System wird unter dem Namen Sky-Trax als Indoor Vehicle Positioning System angeboten. Bei diesem System sind zweidimensionale Bar-Codes an der Decke einer Lagerhalle angebracht. Die Bar-Codes tragen eine eindeutige Kennung, für die die Position des Bar-Codes in der Lagerhalle hinterlegt ist. Ein Bar-Code-Leser ist auf dem Dach eines Flurförderzeugs angebracht und kann die an der Decke angebrachten Bar-Codes lesen. Für den ausgelesenen Bar-Code wird dann über einen an Bord befindlichen Computer die aktuelle Position des Fahrzeugs innerhalb der Lagerhalle bestimmt.

Ebenfalls ist bekannt, RFID-Transponder im Fußboden einer Lagerhalle vorzusehen und das Flurförderzeug mit einem RFID-Lesegerät auszustatten. Das Flurförderzeug kann dann aus den jeweils im Fußboden erkannten RFID-Transpondern eine aktuelle Position bestimmen.

Aus EP 0 639 902 B1 ist ein Verfahren zur Positionsbestimmung eines sich bewegenden Fahrzeugs in einem begrenzten Raum und eine Vorrichtung zur Durchführung des Verfahrens bekannt. Bei dem bekannten Verfahren ist auf einem Fahrzeug eine rotierende Lichtquelle vorgesehen. Der von der Lichtquelle ausgesandte Lichtstrahl trifft aktive Reflektoren, die, durch den eintreffenden Lichtstrahl aktiviert, ein Signal mit einer eindeutigen Codierung diffus abstrahlen. Der aktive Reflektor ist durch die Codierung eindeutig gekennzeichnet. Das Reflektorsignal wird von dem Fahrzeug empfangen und zur Bestimmung der Fahrzeugposition ausgewertet.

Der vorliegenden Erfindung liegt die Aufgabe zugrunde, mit möglichst einfachen Mitteln eine Vorrichtung zu schaffen, die eine zuverlässige Positionsbestimmung für das Flurförderzeug erlaubt.

Erfindungsgemäß wird die Aufgabe durch eine Vorrichtung mit den Merkmalen aus Anspruch 1 gelöst. Vorteilhafte Ausgestaltungen bilden den Gegenstand der Unteransprüche.

Die erfindungsgemäße Vorrichtung dient zur Positionsbestimmung eines Flurförderzeugs innerhalb eines räumlichen Gebiets, in dem mehrere Lichtquellen an vordefinierten Standorten positioniert sind. Bei dem räumlichen Gebiet kann es sich sowohl um eine Lagerhalle als auch um ein Freigelände handeln. Die Lichtquellen sind ausgebildet, um ohne Interaktion mit einem Flurförderzeug eine die Lichtquelle eindeutig kennzeichnende Strahlung auszusenden. Die die Lichtquelle kennzeichnende Strahlung kann in einem Winkelbereich von einem oder mehreren Flurförderzeugen empfangen werden, wobei die Lichtquelle in einer beliebigen Höhe im Raum angeordnet sein kann. Die Lichtquellen senden ihre Strahlung aus, ohne dass hierfür eine Einflussnahme durch das Flurförderzeug auf die Lichtquelle erfolgt ist. Bei der Strahlung handelt es sich bevorzugt um elektromagnetische Strahlungen, die im sichtbaren Bereich, aber auch in nicht sichtbaren Frequenzspektren, ausgesendet werden können. Das Flurförderzeug ist mit einer Empfangseinheit für die Strahlung der Lichtquellen ausgestattet. Die Empfangseinheit ist ausgebildet, um aus der empfangenen Strahlung die Lichtquelle zu identifizieren und einen Winkel der Lichtquelle gegenüber einer fahrzeugfesten Achse zu ermitteln. Die fahrzeugfeste Achse kann dabei willkürlich an dem Fahrzeug festgelegt sein. Die Empfangseinheit bestimmt den Winkel, unter dem die empfangene Strahlung gegenüber dieser fahrzeugfesten Achse auf das Fahrzeug bzw. die Empfangseinheit trifft. Ferner ist das Flurförderzeug mit einer Auswerteeinheit ausgestattet, die dazu ausgebildet ist, um aus mindestens drei identifizierten Lichtquellen und deren Winkeln gegenüber der fahrzeugfesten Achse die Position des Flurförderzeugs zu bestimmen. Aus der Position von drei Lichtquellen kann die Auswerteeinheit die Position des Flurförderzeugs eindeutig bestimmen. Da die Lichtquellen sich in definierten Positionen befinden, ist der Auswerteeinheit die Position der Lichtquellen bekannt. Aus den Winkeln, unter denen die Strahlung der Lichtquellen empfangen wird und den Positionen der Lichtquellen kann die Position des Flurförderzeugs genau bestimmt werden. Die erfindungsgemäße Vorrichtung besitzt den besonderen Vorteil, dass sie flexibel in unterschiedlichen Umgebungen eingesetzt werden kann. Sie ist weder auf einen speziell ausgestalteten Fußboden noch auf besondere Mittel an der Decke oder in einer Lagerhalle angewiesen. Auch ist eine technisch aufwendige Messung der Laufzeit der Strahlung nicht erforderlich. Ein besonderer Vorteil der Erfindung liegt auch darin, dass mehrere Fahrzeuge die Strahlung gleichzeitig empfangen und auswerten können.

In einer bevorzugten Ausgestaltung der erfindungsgemäßen Vorrichtung sendet jede der Lichtquellen permanent oder nach einem vorbestimmten Zeitplan die die Lichtquelle kennzeichnende Strahlung aus.

In einer bevorzugten Ausgestaltung der erfindungsgemäßen Vorrichtung besitzt jede Lichtquelle eine eindeutige Kennung, die auf die abgestrahlte Strahlung moduliert ist. Durch die Demodulation der empfangenen Strahlung kann die Kennung aus dem Signal extrahiert und so die Lichtquelle identifiziert werden. Über die identifizierte Lichtquelle steht die absolute Position der Lichtquelle fest.

Bevorzugt ist die Kennung durch eine Strahlung mit zwei unterschiedlichen Intensitäten auf die Strahlung aufmoduliert. Unter unterschiedlichen Intensitäten wird auch verstanden, dass eine Lichtquelle ein- und ausgeschaltet wird, wobei dann die zweite Intensität die ausgeschaltete Lichtquelle betrifft. Neben der Intensität können grundsätzlich auch andere physikalische Eigenschaften der Lichtquelle verwendet werden, um die Kennung aufzumodulieren. Hier wäre beispielsweise eine Polarisation oder die Frequenz der Strahlung zu nennen.

In einer ebenfalls bevorzugten Ausgestaltung senden die Lichtquellen jeweils mit einer vorbestimmten Frequenz und/oder in einem vorbestimmten Frequenzintervall ihre Strahlung ab. Hierbei kann dann die Information über die Lichtquelle auch in der gewählten Frequenz und/oder in dem gewählten Frequenzintervall liegen, ohne dass eine Kennung auf die ausgesandte Strahlung aufmoduliert wurde.

In einer bevorzugten Ausgestaltung ist die Empfangseinheit an einem höhenverstellbaren Bauteil des Flurförderzeugs angeordnet und die Auswerteeinheit ist ausgebildet, um aus mindestens vier identifizierten Lichtquellen und deren Winkeln die Position des Flurförderzeugs und die Höhe des Bauteils zu bestimmen. Während es für die Positionsbestimmung des Flurförderzeugs ausreicht, drei Lichtquellen zu identifizieren, ist für die zusätzliche Höheninformation lediglich erforderlich, dass eine weitere Lichtquelle identifiziert wird.

Für die Empfangseinheit sind verschiedene Ausgestaltungen möglich. In einer möglichen Ausgestaltung der Empfangseinheit ist eine Vielzahl von kreisförmig angeordneten Fotodioden vorgesehen, die die Strahlung in einem vorbestimmten Winkelintervall empfangen können. Indem eine der Fotodioden in der kreisringförmigen Anordnung auf die Strahlung anspricht, kann die Empfangseinheit die Richtung der Lichtquelle bestimmen. Da die Empfangseinheit fest an dem Fahrzeug montiert ist, liegt somit auch die Information vor, unter welchem Winkel die Lichtquelle, bezogen auf eine fahrzeugfeste Achse, empfangen wurde.

In einer alternativen Ausgestaltung besitzt die Empfangseinheit eine oder mehrere Fotodioden, die auf einer drehbaren Halterung angeordnet sind. Fotodioden können in einem vorbestimmten Winkelintervall die Strahlung einer der Lichtquellen empfangen und die Halterung ist in eine definierte Winkelposition relativ zu der fahrzeugfesten Achse verfahrbar. Bei dieser Ausgestaltung stellt die Fotodiode fest, ob eine Strahlung empfangen wurde und zeichnet die empfangene Strahlung für die Demodulation auf. Der Winkel, unter dem die Strahlung empfangen wurde, wird aus der Winkelposition der drehbaren Halterung mit der Fotodiode bestimmt.

In einer weiteren möglichen Ausgestaltung besitzt die Empfangseinheit mindestens einen Ablenkkörper, über den die Strahlung der Lichtquelle von mehreren Fotodioden empfangen wird. Über den Ablenkkörper wird die einfallende Strahlung abhängig von dem Einfallswinkel der Strahlung abgelenkt und auf mindestens eine Fotodiode gelenkt. Bei dem Ablenkkörper kann es sich beispielsweise um eine drehbare Spiegelanordnung handeln, deren Winkelposition erfasst wird, wenn die Strahlung auf die Fotodiode auftrifft. Aus dem Winkel der Spiegelanordnung ist dann der Winkel der einfallenden Strahlung bekannt. Alternativ ist es auch möglich, als Ablenkkörper einen transparenten Körper, beispielsweise ein Prisma oder ein Tetraeder, vorzusehen. An diesem Ablenkkörper erfolgt eine Brechung der einfallenden Strahlung, wobei der Austrittswinkel der gebrochenen Strahlung aus dem Ablenkkörper abhängig von dem Einfallswinkel der Strahlung ist. Durch die mehreren Fotodioden hinter dem Ablenkkörper kann dann der Winkel der abgelenkten Strahlung festgestellt und hiervon auf den Einfallswinkel der Strahlung auf den Ablenkkörper zurückgerechnet werden.

In einer weiteren bevorzugten Ausgestaltung besitzt die Empfangseinheit mindestens einen flächigen Fotosensor, wobei die Auswerteeinheit und/oder der Fotosensor aus der Position der einfallenden Strahlung auf dem flächigen Fotosensor den Winkel der Lichtquelle gegenüber der fahrzeugfesten Achse bestimmt. Bei dem flächigen Fotosensor kann es sich beispielsweise um ein CCD-Fotoarray handeln, das mit oder ohne Optik einen vorbestimmten Winkelbereich erfasst. Tritt die Strahlung innerhalb dieses Winkelbereichs auf, so kann aus der Position der eintreffenden Strahlung auf dem flächigen Fotosensor der Winkel gegenüber der fahrzeugfesten Achse ermittelt werden.

Die erfindungsgemäße Aufgabe wird auch durch ein Verfahren mit den Merkmalen aus Anspruch 10 gelöst. Vorteilhafte Ausgestaltungen des Verfahrens bilden den Gegenstand der abhängigen Ansprüche.

Das erfindungsgemäße Verfahren dient zur Positionsbestimmung eines Flurförderzeugs innerhalb eines räumlichen Gebiets, in dem mehrere Lichtquellen von definierten Positionen aus eine die Lichtquelle eindeutig kennzeichnende Strahlung aussenden. Das Aussenden der Strahlung erfolgt unabhängig von einer Aktivierung oder einer sonstigen Interaktion der Lichtquelle mit dem Flurförderzeug. In einem weiteren Verfahrensschritt werden an dem Flurförderzeug für mindestens drei Lichtquellen deren Position und jeweils ein Winkel der Lichtquelle gegenüber einer fahrzeugfesten Achse bestimmt. Aus der Position der identifizierten Lichtquelle und deren Winkel wird die Position des Flurförderzeugs bestimmt. Damit das Verfahren lückenlos das räumliche Gebiet erfassen kann, ist es erforderlich, die Lichtquellen so zu positionieren, dass von jedem Punkt des räumlichen Gebiets aus stets mindestens drei Lichtquellen sichtbar sind. Ferner setzt das erfindungsgemäße Verfahren voraus, dass an dem Flurförderzeug für die identifizierte Lichtquelle, beispielsweise über eine in einem Speicher abgelegte Tabelle, die räumliche Position der Lichtquelle bestimmt werden kann.

In einer bevorzugten Weiterbildung des erfindungsgemäßen Verfahrens ist die Lichtquelle eindeutig gekennzeichnet, indem auf die ausgesandte Strahlung der Lichtquelle eine Kennung moduliert ist. Die Modulation der Strahlung kann dann die Lichtquelle identifizieren, damit ihre Position bestimmt werden kann.

In einer bevorzugten Weiterbildung des erfindungsgemäßen Verfahrens wird die Strahlung der Lichtquellen an einem höhenverstellbaren Bauteil des Flurförderzeugs erfasst und aus der Strahlung von vier Lichtquellen die Position des Flurförderzeugs und die Höhe des Bauteils bestimmt.

Eine bevorzugte Ausgestaltung wird nachfolgend anhand der Figuren näher erläutert. Es zeigt:
- Fig. 1: eine Prinzipskizze, in der ein Flurförderzeug seine Position relativ zu vier Lichtquellen bestimmt,
- Fig. 2: eine schematische Ansicht einer Empfangseinheit mit einer Vielzahl von Fotodioden,
- Fig. 3: eine Prinzipskizze mit einer in einem Winkelbereich verfahrbaren Foto-diode und
- Fig. 4: eine Prinzipskizze mit einer im Vollkreis verfahrbaren Fotodiode.

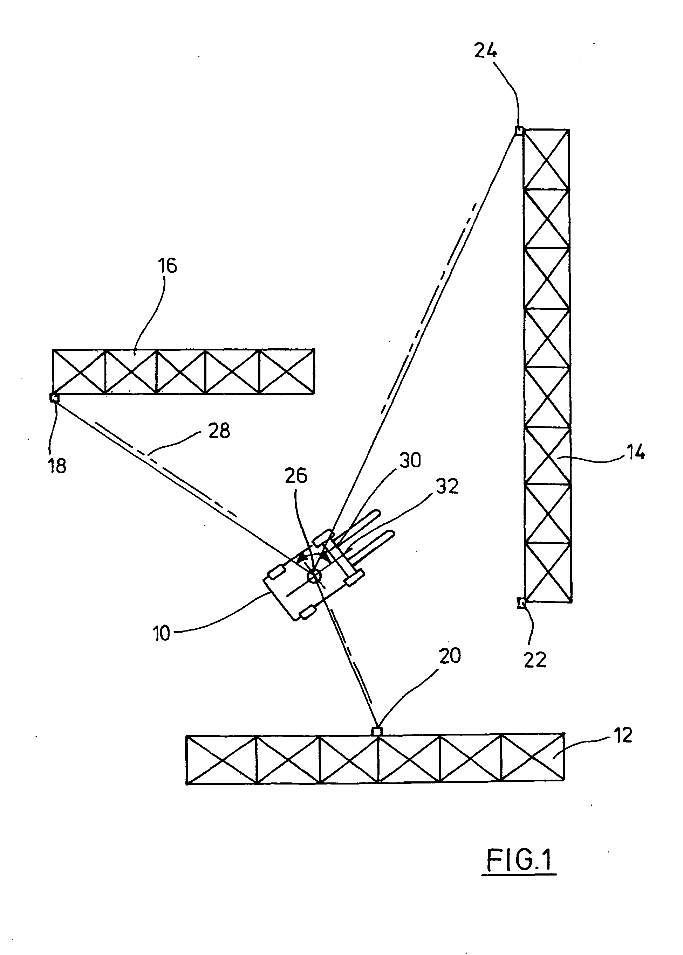

Fig. 1 zeigt eine Prinzipskizze eines Flurförderzeugs 10, das eine Position zwischen drei Regalen 12, 14 und 16 einnimmt. An den Regalen angeordnet sind Lichtquellen 18, 20, 22 und 24. Bei den Lichtquellen kann es sich beispielsweise um Leuchtdioden handeln, die permanent Lichtsignale aussenden. Bei der Lichtquelle 20 reicht es beispielsweise aus, wenn diese in einen Raumbereich von 180°, der von dem Regal 12 fortweist, abstrahlt. Bei an den Ecken eines Regals angeordneten Lichtquellen 18, 22 und 24 können Lichtquellen vorgesehen sein, die unter einem 270° Winkel abstrahlen. Die Verteilung der Lichtquellen in dem Raum sollte so erfolgen, dass in jeder Position in dem Raum mindestens drei Lichtquellen deutlich an dem Flurförderzeug empfangen werden können. Sind in einem Bereich mehrere Flurförderzeuge unterwegs, kann die Situation auftreten, dass ein erstes Flurförderzeug die Sicht auf eine Lichtquelle verhindert. Daher erweist es sich als zweckmäßig, weitere Quellen in dem Raum vorzusehen, sodass eine Überdeckung einer der Lichtquellen nicht verhindern kann, dass ein Flurförderzeug Signale von mindestens drei Lichtquellen empfängt.

Flurförderzeug 10 besitzt einen Empfänger 26, der die ausgesandte Strahlung der Quellen 18, 20, 22 und 24 empfängt. Jedes Signal einer Lichtquelle ist in eindeutiger Weise durch seine Modulation einer Kennung gekennzeichnet. So besitzt beispielsweise die Lichtquelle 18 die dargestellte Modulation 28, wonach ein Lichtsignal lang, zweimal kurz, einmal lang und einmal kurz gesendet wird. Diese Folge von langen und kurzen Signalen wiederholt sich. Die weiteren Lichtquellen 20, 22 und 24 besitzen die ebenfalls eingezeichnete Modulation, die die Lichtquelle eindeutig kennzeichnet.

Die Empfangseinheit 26 empfängt beispielsweise die Modulation 28 unter einem Winkel 30, bezogen auf die Fahrzeuglängsachse 32. Anhand der Modulation 28 kann an dem Flurförderzeug dann ausgewertet werden, dass es sich um die Lichtquelle 18 handelt, die an dem Regal 16 in einer festen räumlichen Position angebracht ist. Indem auch die Position der Lichtquellen 22 und 24 oder zweier beliebiger anderer Lichtquellen ermittelt wird, kann das Flurförderzeug 10 seine Position eindeutig bestimmen. Da auf eine Laufzeitmessung bei der Positionsbestimmung verzichtet wird, ist die Messung von mindestens drei Lichtquellen erforderlich, um die Position des Flurförderzeugs eindeutig festzulegen. Im Übrigen kann auch die Orientierung des Flurförderzeugs eindeutig bestimmt werden, da die Ausrichtung der Fahrzeuglängsachse 32 bezüglich der Lichtquellen bekannt ist. So kann beispielsweise festgestellt werden, in welche Richtung das Flurförderzeug mit seinem Lastteil gerade zeigt.

Zur Vermeidung von störenden Einflüssen, wie beispielsweise Sonneneinstrahlung, Beleuchtung der Regale und dergleichen, können spezielle Frequenzbereiche, wie beispielsweise Infrarotlicht, eingesetzt werden. Auch ist der Einsatz von besonderen Filtern, wie beispielsweise Polarisationsfiltern, möglich. Ferner sorgt die dargestellte Modulation der Lichtsignale in lange und kurze Impulse dafür, dass Fremdeinwirkungen weitestgehend ausgeschlossen werden können. Zur Bestimmung der Fahrzeugposition relativ zu den empfangenen Lichtsignalen der Lichtquellen ist es notwendig, nicht nur die Lichtquelle durch ihre Kennung zu identifizieren, sondern zusätzlich zu wissen, aus welcher Richtung eines Lichtsignals im Bezug zum Fahrzeug die Strahlung empfangen wurde. Sind Kennung und Richtung bekannt, lässt sich mittels eines Doppelwinkel Pfeilverfahrens aus mindestens drei unabhängig voneinander empfangenen Lichtsignalen die Position des Fahrzeugs in der Ebene ermitteln. Ist die Empfangseinheit beispielsweise an einem Hubgerüst angebracht, so müssen mindestens vier unabhängige Lichtsignale empfangen werden, um zusätzlich auch die Höhe des Hubgerüsts zu bestimmen.

In dem dargestellten Ausführungsbeispiel gemäß Fig. 1 ist vorgesehen, dass die Lichtquellen als gesonderte Lichtquellen an den Regalen 12, 14 und 16 angebracht sind. Bei einer entsprechenden Modulation ist es auch möglich, als Lichtquelle bereits vorhandene Lichtquellen, die zur Beleuchtung des Lagers dienen, einzusetzen. Beispielsweise kann auf Leuchtstoffröhren eine zusätzliche Kennung aufmoduliert werden, die die Beleuchtung in der Halle nicht beeinträchtigt, gleichwohl aber dem Flurförderzeug zur Positionsbestimmung dient.

Zur Bestimmung der Position müssen die empfangenen Lichtsignale und Winkelangaben mit Hilfe einer Rechnereinheit verarbeitet werden. Dies kann entweder direkt am Flurförderzeug mittels eines dort vorhandenen Bordcomputers geschehen oder an zentraler Stelle an einem Server ausgeführt werden. Im letztgenannten Fall besteht dann eine Funkverbindung, beispielsweise über W-Lan, zwischen dem Flurförderzeug und dem zentralen Server.

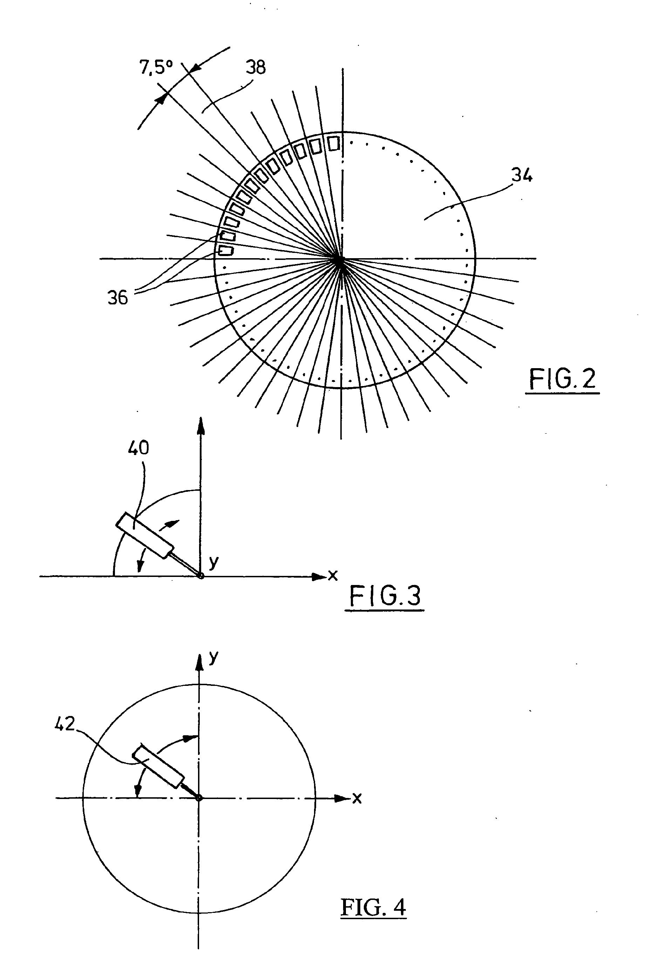

Fig. 2 bis 4 zeigen unterschiedliche Ausgestaltungen der Empfangseinheit 26 an dem Flurförderzeug. Fig. 2 zeigt eine Empfangseinheit 34, die aus einer Vielzahl von kreisringförmigen angeordneten Fotodioden 36 besteht. Zur besseren Übersicht sind in Fig. 2 lediglich die Fotodioden 36 eingezeichnet, die zwischen 9:00 und 12:00 Uhr liegen. Jede der Fotodioden 36 erfasst Licht aus einem definierten Winkelbereich 38, der in dem dargestellten Ausführungsbeispiel 7,5° überdeckt.

Anhand der Information, welche Fotodiode 36 ein Signal empfangen und zur Demodulation weitergeleitet hat, kann ausgewertet werden, in welcher Richtung sich die entsprechende Lichtquelle befindet.

Die erreichbare Winkelgenauigkeit der Vorrichtung 34 ist abhängig von der Anzahl der eingesetzten Fotodioden und der Größe des jeweils von einer Fotodiode abgedeckten Winkelbereichs. Ein besonderer Vorteil der Ausgestaltung gemäß Fig. 2 liegt darin, dass der Empfänger eine hohe mechanische Robustheit besitzt und ohne bewegliche Teile kostengünstig gefertigt werden kann.

Eine alternative Ausgestaltung der Empfangseinheit ist in Fig. 3 dargestellt. Bei dieser Ausgestaltung ist eine einzelne Fotodiode oder eine Gruppe von Fotodioden 40 vorgesehen, die Licht aus einem engen Winkelbereich empfangen können. Durch ein gesteuertes Verfahren der Sensorausrichtung können Lichtsignale aus unterschiedlichen Raumrichtungen empfangen und die dazugehörigen Einfallswinkel in Bezug zur Fahrzeugausrichtung ermittelt werden. Bei dieser Vorgehensweise kann entweder der Sensor selbst mittels geeigneter elektromotorischer Antriebe bewegt werden oder die Lichtsignale erreichen den im Bezug zum Fahrzeug feststehenden Sensor über eine bewegliche Optik oder Anordnung (nicht dargestellt). Vorteilhaft an dieser Ausgestaltung ist, dass die Empfangseinheit aufgrund der Verwendung von nur einer Fotodiode 40 oder einer Gruppe von Fotodioden klein gehalten werden kann. Abhängig von der Auflösung der Fotodiode und der Bewegungsgeschwindigkeit der Antriebe lässt sich eine gute räumliche Auflösung erzielen.

Fig. 4 zeigt eine weitere Ausgestaltung, bei der ebenfalls eine einzelne Diode 42 oder eine Gruppe von Dioden vorgesehen ist, die Licht aus einem engen Winkelbereich empfangen können. Hierbei wird anders als bei dem Ausführungsbeispiel gemäß Fig. 3 der Sensor 42 kontinuierlich in einem Vollkreis bewegt, um so den gesamten Raumbereich mit einer einzelnen Diode abzutasten.

In einer weiteren möglichen Ausgestaltung, die nicht in einer Figur dargestellt ist, besteht die Möglichkeit, zur Erfassung des Lichtsignals und des Winkels der Lichtquelle einen aus einem durchsichtigen Material bestehenden Tetraeder oder ein Prisma vorzusehen. Beim Auftreffen des Lichts auf den Tetraeder oder auf das Prisma erfolgt eine unterschiedliche Intensitätsverteilung auf der Oberfläche, die mit entsprechend verteilt angeordneten Fotodioden erkannt werden kann. Aus der bekannten Ausrichtung des Ablenkkörpers relativ zum Fahrzeug und den unterschiedlich detektierten Lichtintensitäten auf den Oberflächen eines Körpers, kann auf die Lage der empfangenen Lichtquelle geschlossen werden. Die aufmodulierte Kennung der Lichtsignale wird durch die Verwendung eines Ablenkkörpers aus durchsichtigem Material nicht behindert. Der besondere Vorteil dieses Ansatzes liegt darin, dass der mechanische Aufbau einfach ist und kein Sensor räumlich bewegt werden muss.

In einer weiteren Ausgestaltung, die nicht in den Figuren dargestellt ist, wird als Empfangseinheit auf dem Fahrzeug eine CCD-Kamera eingesetzt, die entsprechende mit einer Kennung versehene Lichtquellen in ihrem Sichtfeld identifizieren kann. Dafür ist es erforderlich, dass die Kamera mit einer möglichst hohen Abtastrate arbeitet, die mindestens die doppelte Modulationsfrequenz der zu detektierenden Lichtsignale aufweist. Die Positionsbestimmung erfolgt bei diesem Sensor dadurch, dass die vom Fahrzeug empfangenen Lichtsignale und deren relative Positionen zueinander mit den bekannten und abgespeicherten Positionsdaten der Lichtquellen verglichen werden.

Die Anbringung an der Empfangseinheit erfolgt an einer Stelle des Flurförderzeugs, bei der möglichst freie Rundsicht nach allen Seiten gegeben ist, damit möglichst viele Lichtquellen gleichzeitig erkannt werden können. Denkbar ist auch eine Anbringung des Sensors im Bereich des vertikal beweglichen Hubgerüstes des Flurförderzeugs, wobei dann zur Erkennung einer Hubhöhe zusätzlich noch eine vierte Lichtquelle ausgewertet werden muss.

## Patentansprüche

1. Vorrichtung zur Positionsbestimmung eines Flurförderzeugs (10) innerhalb eines räumlichen Gebiets, in dem mehrere Lichtquellen (18, 20, 22, 24) an vordefinierten Standorten positioniert sind und ohne Interaktion mit dem Flurförderzeug eine die Lichtquelle eindeutig kennzeichnende Strahlung (28) aussenden, wobei das Flurförderzeug eine Empfangseinheit (26) für die Strahlung der Lichtquellen aufweist, die dazu ausgebildet ist, um aus der empfangenen Strahlung die Lichtquelle zu identifizieren und einen Winkel (30) der Lichtquelle gegenüber einer fahrzeugfesten Achse (32) zu ermitteln, und das Flurförderzeug ferner eine Auswerteeinheit aufweist, die dazu ausgebildet ist, um aus mindestens drei identifizierten Lichtquellen und deren Winkeln die Position des Flurförderzeugs zu bestimmen.

2. Vorrichtung zur Positionsbestimmung nach Anspruch 1, **dadurch gekennzeichnet, dass** jede der Lichtquellen permanent oder nach einem vorbestimmten Zeitplan die Strahlung (28) aussendet.

3. Vorrichtung nach Anspruch 1 oder 2, **dadurch gekennzeichnet, dass** jede Lichtquelle eine eindeutige Kennung (28) abstrahlt, die auf die abgestrahlte Strahlung moduliert ist.

4. Vorrichtung nach Anspruch 3, **dadurch gekennzeichnet, dass** die Kennung durch eine Strahlung mit zwei unterschiedlichen Intensitäten aufmoduliert ist.

5. Vorrichtung nach einem der Ansprüche 1 bis 4, **dadurch gekennzeichnet, dass** die Lichtquellen jeweils mit einer vorbestimmten Frequenz und/oder in einem vorbestimmten Frequenzintervall Strahlung senden.

6. Vorrichtung nach einem der Ansprüche 1 bis 5, **dadurch gekennzeichnet, dass** die Empfangseinheit an einem höhenverstellbaren Bauteil des Flurförderzeugs angeordnet und die Auswerteeinheit ausgebildet ist, um aus mindestens vier identifizierten Lichtquellen und deren Winkeln die Position des Flurförderzeugs und die Höhe des Bauteils zu bestimmen.

7. Vorrichtung nach einem der Ansprüche 1 bis 6, **dadurch gekennzeichnet, dass** die Empfangseinheit eine Vielzahl von kreisförmig angeordneten Fotodioden (36) aufweist, die Strahlung in einem vorbestimmten Winkelintervall empfangen können.

8. Vorrichtung nach einem der Ansprüche 1 bis 6, **dadurch gekennzeichnet, dass** die Empfangseinheit eine oder mehrere Fotodioden (40) auf einer drehbaren Halterung aufweisen, wobei die Fotodioden Strahlung in einem vorbestimmten Winkelintervall empfangen können und die Halterung in definierte Winkelpositionen relativ zu der fahrzeugfesten Achse verfahren werden kann.

9. Vorrichtung nach einem der Ansprüche 1 bis 6, **dadurch gekennzeichnet, dass** die Empfangseinheit mindestens einen Ablenkkörper aufweist, der eine einfallende Strahlung abhängig von dem Einfallswinkel der Strahlung ablenkt und auf mindestens eine Fotodiode lenkt.

10. Vorrichtung nach einem der Ansprüche 1 bis 6, **dadurch gekennzeichnet, dass** die Empfangseinheit mindestens einen flächigen Fotosensor aufweist, wobei die Auswerteeinheit und/oder der Fotosensor aus der Position der einfallenden Strahlung auf den flächigen Fotosensor den Winkel der Lichtquelle gegenüber der fahrzeugfesten Achse bestimmt.

11. Verfahren zur Positionsbestimmung eines Flurförderzeug innerhalb eines räumlichen Gebiets, in dem mehrere Lichtquellen von vordefinierten Positionen aus eine die Lichtquelle kennzeichnende Strahlung aussenden, wobei das Aussenden der Strahlung ohne Interaktion mit dem Flurförderzeug erfolgt, bei dem Verfahren wird an dem Flurförderzeug die Position von mindestens drei Lichtquellen und ein Winkel der jeweiligen Lichtquelle gegenüber einer fahrzeugfesten Achse bestimmt, um aus der Position der identifizierten Lichtquellen sowie deren Winkel gegenüber der Fahrzeugachse die Position des Flurförderzeugs zu bestimmen.

12. Vefahren nach Anspruch 11, **dadurch gekennzeichnet, dass** jede der Lichtquellen permanent oder nach einem vorbestimmten Zeitplan die die Lichtquelle kennzeichnende Strahlung (28) aussendet.

13. Verfahren nach Anspruch 11 oder 12, **dadurch gekennzeichnet, dass** eine die Lichtquelle eindeutig kennzeichnende Kennung auf die ausgesandte Strahlung der Lichtquelle moduliert wird.

14. Verfahren nach einem der Ansprüche 11 bis 13, **dadurch gekennzeichnet, dass** die Strahlung der Lichtquelle an einem höhenverstellbaren Bauteil des Flurförderzeugs erfasst wird und aus der Strahlung von vier Lichtquellen die Position des Flurförderzeugs und die Höhe des Bauteils bestimmt wird.
